# EUROPÄISCHE PATENTANMELDUNG

(11) **EP 0 551 636 A1**
(43) Veröffentlichungstag der Anmeldung: **21.07.1993**
(21) Anmeldenummer: 92121729.5
(22) Anmeldetag: 21.12.1992
(51) Int. Cl.: C08J 9/14

(54) **Verfahren zur Herstellung von Polyurethan-Hartschaumstoffen sowie Treibmittelmischung hierfür**

(30) Priorität: 11.01.1992 DE 4200558
(71) Anmelder: BASF Aktiengesellschaft, D-67063 Ludwigshafen (DE)
(72) Erfinder: Volkert, Otto, Dr., W-6719 Weisenheim (DE)

(57) **Zusammenfassung**

Die Erfindung betrifft ein Verfahren zur Herstellung von Polyurethan-Hartschaumstoffen unter Verwendung einer speziellen Treibmittelmischung aus hoch- und/oder perfluorierte organischen Verbindungen, Cyclopentan sowie gegebenenfalls aliphatischen und/oder weiteren cycloaliphatischen Kohlenwasserstoffen mit 4 bis 8 C-Atomen.

## Beschreibung

Gegenstand der Erfindung ist ein Verfahren zur Herstellung von Polyurethan-Hartschaumstoffen unter Verwendung einer speziellen Treibmittelmischung. Gegenstand der Erfindung sind weiterhin diese speziellen Treibmittelmischungen für die Herstellung von Polyurethan-Hartschaumstoffen.

Die Herstellung von Polyurethan-Hartschaumstoffen durch Umsetzung von organischen Polyisocyanaten und/oder modifizierten organischen Polyisocyanaten mit höherfunktionellen Verbindungen mit mindestens zwei reaktiven Wasserstoffatomen, beispielsweise Polyoxyalkylenpolyaminen und/oder vorzugsweise organischen Polyhydroxylverbindungen mit Molekulargewichten von z.B. 500 bis 12 000, und gegebenenfalls Kettenverlängerungs- und/oder Vernetzungsmitteln mit Molekulargewichten bis ungefähr 400 in Gegenwart von Katalysatoren, Treibmitteln, Hilfsmitteln und/oder Zusatzstoffen ist bekannt und wurde vielfach beschrieben. Eine zusammenfassende Übersicht über die Herstellung von Polyurethan-Hartschaumstoffen wird z.B. im Kunststoff-Handbuch, Band VII, "Polyurethane", 1. Auflage 1966, herausgegeben von Dr. R. Vieweg und Dr. A. Höchtlen und 2. Auflage, 1983, herausgegeben von Dr. G. Oertel (Carl. Hanser Verlag, München) gegeben.

Zur Herstellung von Polyurethan-Hartschaumstoffen werden im wesentlichen zwei Arten von Treibmitteln verwendet:
Niedrigsiedende, inerte Flüssigkeiten, die unter dem Einfluß der exothermen Polyadditionsreaktion verdampfen, vorzugsweise halogenierte Kohlenwasserstoffe, wie Methylenchlorid, Trichlorfluormethan u.a., und chemische Verbindungen, die durch eine chemische Reaktion oder thermische Zersetzung Treibgase bilden. Beispielhaft genannt seien die Umsetzung von Wasser mit Isocyanaten unter Bildung von Aminen und Kohlendioxid, die synchron zur Polyurethanbildung abläuft, und die Spaltung von thermisch labilen Verbindungen wie z.B. Azoisobuttersäurenitril, das neben Stickstoff als Spaltprodukt toxisches Tetramethylbernsteinsäuredinitril ergibt, oder Azodicarbonamid, dessen Verwendung als Bestandteil einer Treibmittelkombination in der EP-A-0 092 740 (CA 1 208 912) beschrieben wird. Während die zuletzt genannte Methode, bei der thermisch labile Verbindungen, wie z.B. Azoverbindungen, Hydrazide, Semicarbazide, N-Nitrosoverbindungen, Benzoxazine u.a. (Kunststoffe 66 (1976), 10, Seiten 698 bis 701), üblicherweise in ein vorgefertigtes Polymer eingearbeitet werden, technisch von untergeordneter Bedeutung blieb, finden die physikalisch wirkenden, niedrigsiedenden Flüssigkeiten, insbesondere Chlorfluoralkane, weltweit in großem Maßstabe als Treibmittel zur Herstellung von Polyurethan- oder Polyisocyanurat-Schaumstoffen Verwendung. Nachteilig an diesen Treibmitteln ist aber die Belastung der Umwelt. Bei der Bildung von Treibgasen durch thermische Spaltung oder chemische Reaktion entstehen hingegen Spaltprodukte und/oder reaktive Nebenprodukte, die in das Polyadditionsprodukt eingelagert oder chemisch gebunden werden und zu einer unerwünschten Veränderung der mechanischen Eigenschaften des Kunststoffes führen können. Im Fall der Bildung von Kohlendioxid aus Wasser und Isocyanat entstehen Harnstoffgruppen im Polyadditionsprodukt, die in Abhängigkeit von ihrer Menge zu einer Verbesserung der Druckfestigkeit bis zur Versprödung des Polyurethans führen können.

Nach Angaben der EP-A-351 614 können als Treibmittel für die Herstellung von Polyurethan-Schaumstoffen ferner fluorierte Kohlenwasserstoffe, perfluorierte Kohlenwasserstoffe, Schwefelhexafluorid oder Mischungen aus mindestens zwei dieser Verbindungen verwendet werden. Da diese fluorierten oder perfluorierten Treibmittel in den Aufbaukomponenten zur Herstellung der Polyisocyanat-Polyadditionsprodukte schwer- oder unlöslich sind, werden sie in mindestens einem organischen und/oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig hier ist vor allem der hohe Preis für diese Treibmittel. Um zellhaltige Kunststoffe mit besonders vorteilhafter Zellstruktur zu erhalten, ist man auf eine eng begrenzte Auswahl von Mischungen aus Perfluorpentan und Perfluorhexan angewiesen.

Weiterhin können als Treibmittel Alkane wie Butan, Pentan u.a. verwendet werden. In der DE-A-3 933 335 wird der Einsatz von Cyclopentan vorgeschlagen. Die damit erzielten Schaumstoffe haben eine gröbere, nicht immer einheitliche Zellstruktur und eine erhöhte Wärmeleitfähigkeit.

Weiterhin ist bekannt, Mischungen aus Perfluorverbindungen und anderen niedrigsiedenden organischen Verbindungen als Treibmittel bei der Herstellung von Polyurethan-Hartschaumstoffen einzusetzen.

So werden in der US-A-4 981 879 Mischungen aus Perfluoralkanen mit allen organischen Verbindungen, die einen Siedepunkt zwischen -50°C und +100°C besitzen, beschrieben. Dabei werden verschiedene, z.T. chemisch recht unterschiedliche Verbindungen aufgezählt, wobei als Vorzugsvariante die Verwendung von Trichlorfluormethan genannt ist. Auch in den Ausführungsbeispielen wird nur die Verwendung von Trichlormonofluormethan beschrieben. Damit wird jedoch die Aufgabenstellung, aus Umweltschutzgründen auf die Verwendung derartiger Treibmittel zu verzichten, nicht erfüllt.

In EP-A-0 405 439 wird die Kombination von Perfluoralkanen mit Cycloalkanen erwähnt, wobei jedoch der Cycloalkangehalt kleiner sein soll als der Anteil der Perfluoralkanverbindung. Die geringe Treibwirkung dieser Treibmittelmischung bedingt einen hohen Wassergehalt der Polyolkomponente, der über 3 % liegt. So hergestellte Polyurethan-Schaumstoffe besitzen eine geringere Wärmedämmung und schlechtere mechanische Eigenschaften, insbesondere höhere Sprödigkeit und schlechtere Haftung, als mit herkömmlichen Treibmitteln hergestellte Schaumstoffe.

Der vorliegenden Erfindung lag die Aufgabe zugrunde, ein Verfahren zur Herstellung von Polyurethan-Hartschaumstoffen aufzuzeigen, bei dem weitgehend auf den Einsatz der umweltschädigenden Fluorchlorkohlenwasserstoffe als Treibmittel verzichtet werden kann und das zu feinzelligen Schaumstoffen mit verbesserten Eigenschaften, wie etwa niedrigerer Wärmeleitfähigkeit und verbesserten mechanischen Eigenschaften, insbesondere verbesserter Haftung, führt.

Diese Aufgabe wird erfindungsgemäß überraschenderweise durch die Verwendung einer Treibmittelmischung aus 5 bis 40 Gew.-% hochfluorierter und/oder perfluorierter organischer Verbindungen, insbesondere Kohlenwasserstoffen, 30 bis 95 Gew.-% Cyclopentan und 0 bis 45 Gew.-% aliphatischer und/oder weiterer cycloaliphatischer Kohlenwasserstoffe mit 4 bis 8 Kohlenstoffatomen in dem Verfahren zur Herstellung von Polyurethan-Hartschaumstoffen gelöst, wobei insbesondere mit einem Wassergehalt im Polyol von 0,5 bis 3 Gew.-%, bezogen auf die Polyolkomponente, gearbeitet wird.

Gegenstand der Erfindung ist demgemäß ein Verfahren zur Herstellung von Polyurethan-Hartschaumstoffen durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren und gegebenenfalls
f) Hilfsmitteln und/oder Zusatzstoffen,
bei dem als Treibmittel (d) eine Mischung aus
(d1) 5 bis 40 Gew.-% mindestens einer hoch- und/oder perfluorierten organischen Verbindung,
(d2) 30 bis 95 Gew.-% Cyclopentan und
(d3) 0 bis 45 Gew.-% mindestens eines aliphatischen und/oder weiteren cycloaliphatischen Kohlenwasserstoffes mit 4 bis 8 Kohlenstoffatomen eingesetzt wird, wobei sich die genannten Gewichtsprozente auf die Summe von (d1) + (d2) + (d3) beziehen.

Gegenstand der Erfindung sind weiterhin Treibmittel-Mischungen für die Herstellung von Polyurethan-Hartschaumstoffen, bestehend aus
(d1) 5 bis 40 Gew.-% mindestens eines hoch- und/oder perfluorierten Kohlenwasserstoffes,
(d2) 30 bis 95 Gew.-% Cyclopentan und
(d3) 0 bis 45 Gew.-% mindestens eines aliphatischen und/oder cycloaliphatischen C₄-C₈-Kohlenwasserstoffes, vorzugsweise linearen und/oder verzweigten aliphatischen Kohlenwasserstoffes.

Die erfindungsgemäß zu verwendenden Treibmittel-Mischungen (d) enthalten dabei das Cyclopentan (d2) vorzugsweise in einer Menge von 40 bis 90 Gew.-%, bezogen auf die Summe der Komponenten (d1) bis (d3), d.h. die Treibmittelmischung (d). Bestehen die erfindungsgemäß zu verwendenden Treibmittel-Mischungen (d) nur aus den hoch- und/oder perfluorierten organischen Verbindungen (d1) und Cyclopentan (d2), so liegen die Komponenten in der Treibmittel-Mischung (d) insbesondere in einem Mengenverhältnis (d1):(d2) im Bereich von 10:90 bis 40:60 Gew.-% vor. Ist in den erfindungsgemäß zu verwendenden Treibmittel-Mischungen (d) neben den Komponenten (d1) und (d2) noch mindestens ein aliphatischer und/oder weiterer cycloaliphatischer C₄-C₈-Kohlenwasserstoff (d3) enthalten, liegt diese Komponente (d3) in aller Regel in einer Menge von zu mindestens 5 Gew.-%, vorzugsweise 10 Gew.-%, bezogen auf die gesamte Treibmittel-Mischung (d), vor.

Nach dem Stand der Technik, insbesondere der Lehre der EP-A-0 405 439, hätte der Fachmann erwarten müssen, daß eine Erhöhung des Cycloalkan-/Alkan-Anteils gegenüber den perfluorierten Kohlenwasserstoffen in den Treibmittelmischungen für die Polyurethan-Hartschaum-Herstellung zu PolyurethanHartschaumstoffen mit verschlechterten Eigenschaften, insbesondere hinsichtlich Zellstruktur, Haftung und Isoliereigenschaften, führen würde.

Es hat sich jedoch überraschenderweise gezeigt, daß die unter Verwendung der erfindungsgemäßen Treibmittelmischung hergestellten Polyurethan-Hartschaumstoffe feinzellige Schäume mit einer sehr guten Haftung an Deckschichten sind. Darüber hinaus ist ihre Wärmeleitfähigkeit signifikant geringer als die der nach der Lehre der EP-A-0 405 439 hergestellten Schaumstoffe. Daher sind die erfindunggemäß hergestellten polyurethan-Hartschaumstoffe insbesondere für den Einsatz in der Kühlmöbelindustrie geeignet.

Besonders gute Schaumstoffe werden erhalten, wenn eine Mischung aus hoch- und/oder perfluorierten Alkanen mit Cyclopentan und linearen und/oder verzweigten aliphatischen C₄-C₈-Kohlenwasserstoffen als Treibmittelmischung verwendet wird.

Die erfindungsgemäßen Treibmittel-Mischungen werden bei der Herstellung der Polyurethan-Hartschaumstoffe üblicherweise in einer Menge von 2 bis 25 Gew.-%, vorzugsweise von 5 bis 15 Gew.-%, bezogen auf die bei der Herstellung der Polyurethan-Hartschaumstoffe eingesetzte Komponente (b), d.h. die höhermolekulare Verbindung mit mindestens zwei reaktiven Wasserstoffatomen, eingesetzt.

Zur Erweiterung des Verarbeitungsbereichs in bezug auf die Reaktionsparameter und Verschäumungsvorrichtungen und eine Erhöhung der Verarbeitungssicherheit, verbunden mit einer Reduzierung der Bildung von technisch unbrauchbarem Schaumstoffausschuß, hat es sich als vorteilhaft erwiesen, die erfindungsgemäße Treibmittel-Mischung (d) in Verbindung mit Wasser als zusätzlichem Treibmittel zu verwenden. In Abhängigkeit von der gewünschten Schaumstoffdichte und eingesetzten Menge an Treibmittel-Mischung liegen die Wassergehalte, bezogen auf die Komponente (b), zweckmäßigerweise über 0,1 Gew.-%, vorzugsweise im Bereich von 0,5 bis 3 Gew.-%.

Zu den einzelnen Komponenten der erfindungsgemäß einzusetzenden Treibmittelmischung (d) ist folgendes zu sagen:
Als Komponente (d1), d.h. als hochfluorierte oder perfluorierte organische Verbindung, kommen beispielsweise in Betracht: hochfluorierte oder perfluorierte, lineare oder cyclische Ether mit 4 bis 12 Kohlenstoffatomen, vorzugsweise 4 bis 6 Kohlenstoffatomen, wie z.B. Perfluordiethyl-, Perfluordipropyl- und Perfluorethylpropylether, Oligomere des Perfluorethylenoxids, des Perfluorpropylenoxids oder gemischte Perfluorethylen-perfluorpropylenoxide sowie cyclische Perfluorether wie z.B. Perfluortetrahydrofuran oder Perfluoralkyltetrahydrofurane, und hochfluorierte oder perfluorierte tertiäre Alkylamine mit 1 bis 5 Kohlenstoffatomen, vorzugsweise 2 bis 4 Kohlenstoffatomen im Alkylrest, wie z.B. Perfluortriethyl-, Perfluortripropyl- oder Perfluortributylamin, sowie bei Raumtemperatur gasförmige aliphatische oder cycloaliphatische Perfuoralkane, wie z.B. Perfluorpropan, Perfluorbutan oder Perfluorcyclobutan, die unter Druck, z.B. bei einem Druck bis zu ungefähr 25 bar, verflüssigt, gemischt und emulgiert werden können.

Vorzüglich bewährt haben sich und daher vorzugsweise verwendet als Treibmittel-Komponente (d1) werden bei Raumtemperatur flüssige, aliphatische oder cycloaliphatische partiell, fluorierte oder perfluorierte Kohlenwasserstoffe mit 3 bis 8 Kohlenstoffatomen, vorzugsweise 5 und 6 Kohlenstoffatomen. Als perfluorierte und hochfluorierte Kohlenwasserstoffe dieser Art seien beispielhaft genannt: Perfluorpentan, Perfluorhexan, Perfluorheptan, Perfluoroctan, Perfluorcyclopentan, Perfluorcyclohexan sowie Hexafluorpropan und Heptafluorpropan. Verwendung finden dabei vorzugsweise Perfluorpentan und insbesondere Perfluorhexan sowie Mischungen davon. Als hochfluorierte organische Verbindungen werden zweckmäßigerweise solche eingesetzt, die überwiegend, beispielsweise zu mindestens 85 % fluoriert sind, jedoch mindestens ein, vorzugsweise lediglich ein Wasserstoffatom gebunden haben.

Die erfindungsgemäß geeigneten in den Ausgangskomponenten für die Polyurethan-Hartschaumstoff-Herstellung schwer- oder unlöslichen, (per)fluorierten, organischen Verbindungen (d1), die zweckmäßigerweise einen Siedepunkt von maximal 150°C, vorzugsweise von 40 bis 80°C, aufweisen, können einzeln oder in Form von Mischung miteinander Verwendung finden.

Als Komponente (d3) der erfindungsgemäß einzusetzenden Treibmittel-Mischungen kommen neben weiteren Cycloalkanen, wie z.B. Cyclohexan, insbesondere die linearen und/oder verzweigten Alkane mit 4 bis 8 Kohlenstoffatomen, wie Butan, Pentan, Hexan, Heptan oder Octan, in Betracht. Als besonders vorteilhaft haben sich dabei die linearen und/oder verzweigten Alkane mit 5 oder 6 Kohlenstoffatomen erwiesen, insbesondere n-Pentan, iso-Pentan, isomere Pentan-Gemische oder iso-Hexan.

Die Herstellung der Polyurethan-Hartschaumstoffe erfolgt durch Umsetzung in an sich bekannter Weise von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart
d) der erfindungsgemäßen Treibmittelmischung sowie von
e) Katalysatoren und gegebenenfalls
f) üblichen weiteren Hilfsmitteln und/oder Zusatzstoffen.

Zur Herstellung der Polyurethan-Hartschaumstoffe nach dem erfindungsgemäßen Verfahren finden, mit Ausnahme der Treibmittel (d), die an sich bekannten Aufbaukomponenten Verwendung, zu denen im eizelnen folgendes auszuführen ist.
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylendiisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4-und/oder 2,6-Toluylen-diisocyanat gegebenenfalls gemischt werden.
   Besonders bewährt haben sich als organische Polyisocyanate und kommen daher vorzugsweise zur Anwendung: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethandiisocyanat-Isomerengehalt von 30 bis 80 Gew.-%, vorzugsweise von 30 bis 55 Gew.-%.
b) Als höhermolekulare Verbindungen b) mit mindestens zwei reaktiven Wasserstoffatomen werden zweckmäßigerweise solche mit einer Funktionalität von 2 bis 8, vorzugsweise 2 bis 6, und einem Molekulargewicht von 400 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Der Hydroxylzahl der Polyhydroxylverbindungen beträgt dabei in aller Regel 150 bis 850 und vorzugsweise 200 bis 600.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3, und ein Molekulargewicht von 480 bis 3000, vorzugsweise 1200 bis 3000 und insbesondere 1800 bis 2500.
   Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 400 bis 8000, vorzugsweise 1200 bis 6000 und insbesondere 1800 bis 4000 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyesterpolyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
   Als Polyolverbindungen besonders bewährt haben sich und daher vorzugsweise verwendet werden Mischungen, die bezogen auf 100 Gew.-Teile, zweckmäßigerweise enthalten:
   bi) 0 bis 95 Gew.-Teile, vorzugsweise 20 bis 80 Gew.-Teile eines mit Sucrose gestarteten Polyether-polyols mit einer Hydroxylzahl von 300 bis 500, vorzugsweise 350 bis 450 auf der Grundlage von 1,2-Propylenoxid oder 1,2-Propylenoxid und Ethylenoxid,
   bii) 0 bis 15 Gew.-Teile, vorzugsweise 5 bis 15 Gew.-Teile eines mit Sorbit gestarteten Polyether-polyols mit einer Hydroxylzahl von 400 bis 600, vorzugsweise von 450 bis 550 auf der Grundlage von 1,2-Propylenoxid oder 1,2-Propylenoxid und Ethylenoxid,
   biii) 0 bis 20 Gew.-Teile, vorzugsweise 5 bis 15 Gew.-Teile eines mit Ethylendiamin gestarteten Polyether-polyols mit einer Hydroxylzahl von 700 bis 850, vorzugsweise von 750 bis 800 auf der Grundlage von 1,2-Propylenoxid
   und
   biiii) 0 bis 60 Gew.-Teile, vorzugsweise 5 bis 40 Gew.-Teile eines Polyether-polyols mit einer Hydroxylzahl von 400 bis 600, vorzugsweise von 450 bis 550 auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermoleküle.
c) Die Polyurethan-Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.
d) Die erfindungsgemäßen Treibmittelmischungen aus den vorstehend beschriebenen hoch- und/oder perfluorierten organischen Verbindungen (d1), dem Cyclopentan (d2) sowie gegebenenfalls einem aliphatischen und/oder weiteren cycloaliphatischen Kohlenwasserstoff (d3) und insbesondere die hoch- und/oder perfluorierten Verbindungen (d1) werden zur Verarbeitung in dem erfindungsgemäßen Verfahren vorzugsweise in den Aufbaukomponenten (a), (b) oder in Mischungen aus (b) und (c) oder in (a) und (b) emulgiert. Zur Erzielung derartiger treibmittelhaltiger Emulsionen eignen sich die aus der Polyurethanchemie bekannten Emulgatoren. Als Emulgatoren insbesondere eingesetzt werden oligomere Acrylate, die als Seitengruppen Polyoxyalkylen- und Fluoralkanreste gebunden enthalten und einen Fluorgehalt von ungefähr 5 bis 30 Gew.-% aufweisen. Oligomere Acrylate dieser Art sind aus der Kunststoffchemie hinreichend bekannt (vgl. unter anderem EP-A-351 614).
   Die als Emulgator z.B. geeigneten oligomeren Acrylate mit Polyoxyalkylen- und Fluoralkanresten als Seitengruppen werden zweckmäßigeweise in einer Menge von 0,01 bis 6 Gew.-Teilen, vorzugsweise 0,2 bis 3,5 Gew.-Teilen und insbesondere 0,5 bis 2,0 Gew.-Teilen, bezogen auf 100 Gew.-Teile der Aufbaukomponenten (a), (b) oder der Mischung aus (b) und (c) eingesetzt.
   Zur Emulgierung der Treibmittelmischung (d) eignen sich, wie bereits ausgeführt wurde, die organischen und/oder modifizierten organischen Polyisocyanate (a) und die höhermolekularen Verbindungen mit mindestens zwei reaktiven Wasserstoffatomen (b). Geeignet sind ferner Mischungen aus (b) und niedermolekularen Kettenverlängerungs- und/oder Vernetzungsmitteln (c).
   Bei Verwendung von organischen und/oder modifizierten organischen Polyisocyanaten (a) als andere Emulsionsphase finden vorzugsweise aromatische Polyisocyanate, ausgewählt aus der Gruppe 2,4-, 2,6- Toluylen-diisocyanat oder Mischungen der genannten Isomeren, 4,4'-, 2,4'- und 2,2'-Diphenylmethan-diisocyanat oder Mischungen aus mindestens zwei der genannten Isomeren und Mischungen aus Diphenylmethan-diisocyanaten und Polyphenyl-polymethylen-polyisocyanaten Anwendung. Sofern die organischen Polyisocyanate bei Raumtemperatur kristallin sind, werden sie durch Mischen mit flüssigen Polyisocyanaten und/oder durch geeignete partielle Modifizierung, wie z.B. Carbodiimidisierung und/oder Urethanisierung, verflüssigt.
   Als andere Emulsionsphase finden jedoch vorzugsweise die höhermolekularen Verbindungen mit mindestens zwei reaktiven Wasserstoffatomen (b) Verwendung. Insbesondere geeignet sind Polyester-polyole oder deren Gemische mit einer Funktionalität von 2 bis 3 und einem Molekulargewicht von 480 bis 3000 und Polyether-polyole oder deren Gemische mit einer Funktionalität von 2 bis 6 und einem Molekulargewicht von 400 bis 8000, wobei diese zweckmäßigerweise ausgewählt sind aus der Gruppe der Polyoxyethylen-, Polyoxypropylen-, Polyoxypropylen-polyoxyethylen-polyole und Polyoxytetramethylen-glykole oder Mischungen davon.
   Die erfindungsgemäßen treibmittelhaltigen Emulsionen enthalten somit, oder bestehen vorzugsweise aus
   mindestens einer hoch- und/oder perfluorierten organischen Verbindung (d1) und Cyclopentan (d2) im Mengenverhältnis (d1):(d2) im Bereich von 10-40:90-60 sowie
   mindestens einem organischen und/oder modifizierten organischen Polyisocyanat (a) oder mindestens einer höhermolekularen Verbindung mit mindestens zwei reaktiven Wasserstoffatomen (b) oder mindestens einem niedermolekularen Kettenverlängerungs- und/oder Vernetzungsmittel (c) oder einer Mischung aus (b) und (c).
   Als treibmittelhaltige Emulsion insbesondere bewährt haben sich solche, die bestehen aus
   5-15 Gew.-Teilen, bezogen auf 100 Gew.-Teile von (b) oder (b) und (c), einer vorstehend beschriebenen erfindungsgemäßen Treibmittel-Mischung (d) aus den Komponenten (d1), (d2) sowie gegebenenfalls (d3),
   0-5 Gew.-Teilen, vorzugsweise 0,5 bis 3 Gew.-Teilen, bezogen auf 100 Gew.-Teile von (b) oder (b) und (c), an Wasser und
   mindestens einer höhermolekularen Verbindung mit mindestens zwei reaktiven Wasserstoffatomen (b) oder Mischungen aus (b) und niedermolekularen Kettenverlängerungs- und/oder Vernetzungsmitteln (c) sowie dem Emulgator.
   Zur Herstellung der treibmittelhaltigen Emulsionen werden die Aufbaukomponenten (a) oder (b) bzw. Mischungen aus (b) und (c) und die Treibmittelmischung (d) zweckmäßigerweise in Gegenwart eines Emulgators, vorzugsweise eines oligomeren Acrylats, bei Temperaturen von 0 bis 70°C, vorzugsweise von 20 bis 40°C, intensiv vermischt. Als geeignete Mischaggregate hierfür seien beispielhaft genannt: statische Mischer, wie z.B. SMX der Firma Sulzer (Schweiz) oder dynamische Mischer, wie z.B. Propellerrührer oder Ultra-Turrax® der Firma Hanke und Kunkel (BRD).
e) Als Katalysatoren (e) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin,Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
f) Der Reaktionsmischung zur Herstellung der Polyurethan-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.
   Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der Polyurethan-Hartschaumstoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt.Falls die Polyurethan-Hartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Die Polyurethan-Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht. Die Vermischung kann, wie bereits dargelegt wurde,mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

Die nach dem erfindungsgemäßen Verfahren hergestellten Polyurethan-Hartschaumstoffe oder Hartformschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

### Beispiele

### Beispiel 1

### a) Herstellung der Basismischung (im folgenden A-Komponente)

Zu 79,0 Gew.-Teilen eines Polyether-polyols mit einer Hydroxylzahl von 400, hergestellt aus Sucrose als Startermolekül und 1,2-Propylenoxid, wurden 15,5 Gew.-Teile eines Polyether-diols mit einer Hydroxylzahl von 105, hergestellt aus Propandiol-1,2 und 1,2-Propylenoxid, 2,6 Gew.-Teile Polysiloxan-Schaumstabilisator (Tegostab® B 8406 der Firma Goldschmidt AG, Essen) und 2,5 Gew.-Teile N,N-Dimethylcylohexylamin zugemischt.

### b) Herstellung der treibmittelhaltigen Emulsion

Durch Wasserzugabe zur A-Komponente wurde ein Wassergehalt von 2,9 Gew.-%, bezogen auf die A-Komponente eingestellt. Zu 100 Gew.-Teilen der wasserhaltigen A-Komponente wurden unter intensivem Rühren 3 Gew.-Teile Perfluorhexan und 5,2 Gew.-Teile Cyclopentan zugemischt. Man erhielt eine milchig-trübe Emulsion, die bei Raumtemperatur 4 - 5 Tage stabil war.

### c) Herstellung des Schaumstoffes

108,2 Gew.-Teile der nach b) hergestellten treibmittelhaltigen Emulsion wurden mit 142 Gew.-Teilen einer Mischung aus Diphenylmethan-diisocyanaten und Polyphenylpolymethylen-polyisocyanaten mit einem NCO-Gehalt von 31 Gew.-% (Lupranat® M2OS der BASF Aktiengesellschaft) bei 23°C unter intensivem Rühren vermischt, die schaumfähige Reaktionsmischung in ein offenes Formwerkzeug eingefüllt und dort aufschäumen gelassen. Man erhielt einen sehr feinzelligen Polyurethan-Hartschaumstoff mit einer Dichte von 28 g/l, der über 90 % geschlossene Zelle besaß und eine spezifische Wärmeleitfähigkeit von 18,6 mW/m°K aufwies.

### Vergleichsbeispiel

Es wurde wie in Beispiel 1 verfahren mit dem Unterschied, daß an Stelle von Cyclopentan n-Pentan verwendet wurde. Man erhielt einen Schaum mit einer spezifischen Wärmeleitfähigkeit von 20,6 mW/m°K.

### Beispiel 2

Die Herstellung der A-Komponente erfolgte wie in Beispiel 1a. Durch Wasserzusatz wurde ein Wassergehalt von 2,4 Gew.-% der A-Komponente eingestellt. Zu 100 Gew.-Teilen der wasserhaltigen A-Komponente wurden unter intensivem Rühren 3 Gew.-Teile Perfluorcyclohexan und 6,5 Gew.-Teile Cyclopentan zugemischt. Es entstand eine milchig-trübe Emulsion.

Die Herstellung des Polyurethan-Hartschaumes erfolgte wie in Beispiel 1c, wobei 109,5 Gew.-Teile der Emulsion mit 136 Gew.-Teilen Lupranat M20S zur Reaktion gebracht wurden. Es entstand ein feinzelliger Polyurethan-Hartschaumstoff mit einer Dichte von 28 g/l und einem Anteil an geschlossenen Zellen von über 90 %, der eine spezifische Wärmeleitfähigkeit von 18,4 mW/m°K aufwies.

### Beispiel 3

Die Herstellung der A-Komponente erfolgte wie in Beispiel 1a. Durch Wasserzusatz wurde ein Wassergehalt von 2,0 Gew.-% der A-Komponente eingestellt. Zu 100 Gew.-Teilen der wasserhaltigen A-Komponente wurden unter intensivem Rühren 3 Gew.-Teile Perfluorcyclohexan und 7,7 Gew.-Teile Cyclopentan vermischt. Es entstand eine milchig-trübe Emulsion.

Die Herstellung des Schaumes erfolgte wie in Beispiel 1c, wobei 110,7 Gew.-Teile der Emulsion mit 129 Gew.-Teilen Lupranat M20S zur Reaktion gebracht wurden.

Es entstand ein feinzelliger Polyurethan-Hartschaumstoff mit einer Dichte von 28 g/l und einem Anteil geschlossener Zellen von über 90 %, der eine spezifische Wärmeleitfähigkeit von 18,1 mW/m°K besaß.

### Beispiel 4

Die Herstellung der A-Komponente erfolgte wie in Beispiel 1a. Durch Zumischen von Wasser wurde ein Wassergehalt von 2,2 Gew.-% der A-Komponente eingestellt. Zu 100 Gew.-Teilen der wasserhaltigen A-Komponente wurden unter intensivem Rühren 1,4 Gew.-Teile Perfluorhexan und 7,6 Gew.-Teile Cyclopentan zugemischt. Es entstand eine milchige Emulsion.

Die Herstellung des Schaumstoffes erfolgte wie in Beispiel 1c, wobei 109 Gew.-Teile der Emulsion mit 131 Gew.-Teilen Lupranat M20S umgesetzt wurden.

Es entstand ein feinzelliger Polyurethan-Hartschaumstoff mit einer Dichte von 28 g/l und einem Anteil geschlossener Zellen von über 90 %, der eine spezifische Wärmeleitfähigkeit von 18,3 mW/m°K aufwies.

### Beispiel 5

Die Herstellung der A-Komponente erfolgte wie in Beispiel 1a. Durch Wasserzusatz wurde ein Wassergehalt von 2,6 Gew.-% eingestellt. Zu 100 Gew.-Teilen der wasserhaltigen A-Komponente wurden unter intensivem Rühren 3 Gew.-Teile Perfluorhexan und 7 Gew.-Teile Cyclopentan zugesetzt. Die Schaumherstellung erfolgte wie in Beispiel 1c, wobei 110 Gew.-Teile der Emulsion mit 139 Gew.-Teilen Lupranat M20S umgesetzt wurden. Es entstand ein feinzelliger Polyurethan-Hartschaumstoff mit einer Dichte von 28 g/l, einem Anteil geschlossener Zellen von über 90 % und einer spezifischen Wärmeleitfähigkeit von 18,5 mW/m°K.

### Beispiel 6

Die Herstellung der A-Komponente erfolgte wie in Beispiel 1a. Durch Wasserzusatz wurde ein Wassergehalt von 2,6 Gew.-% bezogen auf die A-Komponente eingestellt. Zu 100 Gew.-Teilen der wasserhaltigen A-Komponente wurden unter intensivem Rühren 3 Gew.-Teile Perfluorhexan, 4,9 Gew.-Teile Cyclopentan, 1,5 Gew.-Teile Isohexan und 0,6 Gew.-Teile n-Pentan zugemischt. Es entstand eine milchig-trübe, stabile Emulsion.

Die Herstellung des Schaumes erfolgte wie in Beispiel 1c, wobei 110 Gew.-Teile der Emulsion mit 139 Gew.-Teilen Lupranat M20S umgesetzt wurden.

Es entstand ein feinzelliger Polyurethan-Hartschaumstoff mit einer Dichte von 28 g/l, einem Anteil an geschlossenen Zellen von über 90 % und einer spezifischen Wärmeleitfähigkeit von 17,5 mW/m°K.

## Patentansprüche

1. Verfahren zur Herstellung von Polyurethan-Hartschaumstoffen durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren sowie gegebenenfalls
f) Hilfsmitteln und/oder Zusatzstoffen,
dadurch gekennzeichnet, daß als Treibmittel (d) eine Mischung aus
(d1) 5 bis 40 Gew.-% mindestens einer hoch- und/oder perfluorierten organischen Verbindung,
(d2) 30 bis 95 Gew.-% Cyclopentan und
(d3) 0 bis 45 Gew.-% mindestens eines aliphatischen und/oder cycloaliphatischen Kohlenwasserstoffs mit 4 bis 8 Kohlenstoffatomen
verwendet wird.

2. Verfahren nach Anspruch 1, dadurch gekennzeichnet, daß das Treibmittel (d) in einer Menge von 5 bis 15 Gew.-%, bezogen auf die höhermolekulare Verbindung (b), eingesetzt wird.

3. Verfahren nach Anspruch 1, dadurch gekennzeichnet, daß das Treibmittel (d) im organischen und/oder modifizierten organischen Polyisocyanat (a) emulgiert wird.

4. Verfahren nach Anspruch 1, dadurch gekennzeichnet, daß das Treibmittel (d) in der höhermolekularen Verbindung mit mindestens zwei reaktiven Wasserstoffatomen (b) emulgiert wird.

5. Treibmittelmischung für die Herstellung von Polyurethan-Hartschaumstoffen, bestehend aus
(d1) 5 bis 40 Gew.-% mindestens einer hoch- und/oder perfluorierten organischen Verbindung,
(d2) 30 bis 95 Gew.-% Cyclopentan und
(d3) 0 bis 45 Gew.-% mindestens eines aliphatischen und/oder cycloaliphatischen Kohlenwasserstoffes mit 4 bis 8 Kohlenstoffatomen.

6. Treibmittelmischung nach Anspruch 5, dadurch gekennzeichnet, daß als hoch- und/oder perfluorierte Verbindungen (d1) hoch- und/oder perfluorierte Alkane mit 3 bis 8 Kohlenstoffatomen verwendet werden.

7. Treibmittelmischung nach Anspruch 6, dadurch gekennzeichnet, daß als hoch- und/oder perfluorierte organischen Verbindungen (d1) Perfluorpentan und/oder Perfluorhexan verwendet werden.

8. Treimittelhaltige Emulsion für die Herstellung von Polyurethan-Hartschaumstoffen aus 5 bis 15 Gew.-% der Treibmittelmischung (d) nach Anspruch 5, 0,5 bis 3 Gew.-% Wasser und 82 bis 94,5 Gew.-% mindestens einer höhermolekularen Verbindung mit mindestens zwei reaktiven Wasserstoffatomen (b) oder Mischungen dieser Verbindung mit üblichen niedermolekularen Kettenverlängerungs- und/oder Vernetzungsmitteln (c).
